# EUROPEAN PATENT APPLICATION

(11) **EP 4 272 577 A1**
(43) Date of publication of application: **08.11.2023**
(21) Application number: 21915904.3
(22) Date of filing: 31.12.2021
(51) Int. Cl.: A23L 29/30, A23L 5/00

(54) **DEXTRIN WITH IMPROVED TURBIDITY, AND METHOD FOR PRODUCING SAME**

(30) Priority: 31.12.2020 KR 20200189951
(71) Applicant: Samyang Corporation, Jongno-gu Seoul 03129 (KR)
(72) Inventor: PARK, Ji Won, Seongnam-si, Gyeonggi-do 13583 (KR); KIH, Min Ji, Seoul 05852 (KR); KIM, Go-Eun, Gwangju-si, Gyeonggi-do 12777 (KR); PARK, Chong Jin, Seoul 06723 (KR); YANG, Jae-Kyung, Suwon-si, Gyeonggi-do 16698 (KR); HAN, Jung Sook, Anyang-si, Gyeonggi-do 14062 (KR)
(74) Representative: Schrell, Andreas
(86) International application number: PCT/KR2021/020382
(87) International publication number: WO 2022/146107

(57) **Abstract**

The present invention relates to dextrin with improved turbidity and a method for producing the same.

## Description

### [TECHNICAL FIELD]

The present invention relates to dextrin without exhibiting turbidity or causing turbidity formation and a method for producing the same.

### [BACKGROUND ART]

Dextrin is a carbohydrate having a numerical value of Dextrose Equivalent (DE) of 5 to 20, and is substance containing a number of high-molecular substances with 10 or more of a degree of polymer (DP) of glucose. Dextrin has gelatinization and aging properties of starch, and has water-soluble properties such as saccharides or oligosaccharides dissolved in water.

Dextrin is used in various industries such as clothing, pharmaceuticals, paper, steel, cosmetics, and the like, as well as food, and most industries prefer a liquid phase, so the need to develop liquid dextrin having no worry for microorganism proliferation is issued. However, a solution with a dextrin content of 50% by weight or more may cause aging of starch during storage, and a solution with a dextrin content of 50% by weight or less may cause proliferation of microorganisms during storage, so there is a concern of hygiene problems along with the change in physical properties.

### [DISCLOSURE]

### [TECHNICAL PROBLEM]

To solve the conventional problems mentioned above, an embodiment of the present invention is to provide dextrin which can be stored in liquid phase at a high concentration without possibility of microorganism proliferation and a method for producing the same.

Additional embodiment of the present invention provides a food, a food additive, a beverage or a beverage additive, a powdered emulsified composition, a cosmetic, a medicine and the like, comprising starch, dextrin, an oligosaccharide, and the like, which comprises the dextrin.

### [TECHNICAL SOLUTION]

An embodiment of the present invention relates to dextrin with improved turbidity. The dextrin may include carbohydrates having a molecular weight of 100,000 or more at 8% by weight or less, carbohydrates having a molecular weight of more than 1,000 to less than 100,000 at more than 84% by weight, carbohydrates having a molecular weight of 50,000 or more at 14% by weight or less, carbohydrates having a molecular weight of 25,000 or more at 22% by weight or less, or carbohydrates having a molecular weight of 250,000 or more at 2% by weight or less, based on 100% by weight of the total solid content.

Another embodiment of the present invention relates to a method for producing dextrin with improved turbidity, comprising a step of liquefying starch to produce a reacting product with Dextrose Equivalent (DE) of 15 to 30; and a step of obtaining a high-molecular fraction by separating the reacting product into a high-molecular fraction and a low-molecular fraction.

Other embodiment of the present invention relates to a method for producing dextrin and an oligosaccharide, comprising a step of liquefying starch to produce a reacting product with Dextrose Equivalent (DE) of 15 to 30; and a step of obtaining a high-molecular fraction and a low-molecular fraction by separating the reacting product into a high-molecular fraction and a low-molecular fraction.

Hereinafter, the present invention will be described in more detail.

An embodiment of the present invention relates to dextrin with improved turbidity.

The dextrin according to one embodiment of the present invention is a starch hydrolysate which may be carbohydrate including a number of polysaccharides, for example, a number of saccharides of saccharide with DP10 or higher. In addition, the dextrin is a starch hydrolysate, and may be a high-molecular fraction among products with high purity separated using a SMB (simulated moving bed) of a starch hydrolysate which is prepared by using maltotetraose producing amylase (G4-amlylase).

Accordingly, the dextrin according to an embodiment of the present invention may be a mixture of polysaccharide of saccharides with DP10 or higher, oligosaccharide of saccharides with DP3 to DP9, monosaccharide and disaccharide. Specifically, the dextrin may be a starch hydrolysate prepared by using maltotetraose producing amylase (G4-amlylase), the sacchairdes with DP3 to DP9 may be maltooligosaccharides, and the dextrin is a starch hydrolysate, and may be a high-molecular fraction among products with high purity separated using a SMB (simulated moving bed) of a starch hydrolysate which is prepared by using maltotetraose producing amylase (G4-amlylase).

The dextrin according to an embodiment of the present invention is a starch hydrolysate, and the starch may include amylose and/or amylopectin. For example, the content of amylopectin of the starch may be 20% by weight or more, 30% by weight or more, 40% by weight or more, 50% by weight or more, 60% by weight or more, 70% by weight or more, 80% by weight or more, 85% by weight or more, 90% by weight or more, 95% by weight or more, 96% by weight or more, 97% by weight or more, 98% by weight or more, or 99% by weight or more. For example, the amylose content of the starch may be 30% by weight or more, 40% by weight or more, 50% by weight or more, 60% by weight or more, 70% by weight or more, 80% by weight or more, 90% by weight or more, or 95% by weight or more. As an embodiment, the starch may comprise 70 to 95% by weight of amylose and 5 to 30% by weight of amylopectin.

For example, the starch may be at least one selected from the group consisting of grain starch, rhizome starch, glutinous grain starch and high-amylose starch. For example, the starch may be at least one selected from the group consisting of corn starch, rice starch, barley starch, wheat starch, tapioca starch, potato starch, sweet potato starch, soybean starch, waxy corn starch and glutinous rice starch.

The dextrin according to one embodiment of the present invention may comprise a number of carbohydrates of saccharide with DP10 or higher, and may comprise a high-molecular carbohydrate and/or a low-molecular carbohydrate among carbohydrates of saccharides with DP10 or higher at a specific content. For example, the dextrin according to one embodiment of the present invention may have a reduced relative content of the high-molecular carbohydrate among the carbohydrates of saccharide with DP10 or higher, and specifically, it may comprise high-molecular polysaccharides at a certain content or less and low-molecular polysaccharides at a certain content or more.

The dextrin according to an embodiment of the present invention has a low viscosity while having a low DE value, and the turbidity is not exhibited or significantly lowered. Such means that the dextrin has a molecular weight distribution that high-molecular saccharides are distributed toward a relatively low molecular weight. Therefore, the improved turbidity can be inferred from a low content of the high-molecular weight polysaccharides or carbohydrates which have similar properties to starch capable of causing aging (turbidity), for example, the high-molecular carbohydrates with a molecular weight of 100,000 or more, but the technical features of the present invention are not limited to the theoretical inference.

For example, it may be the dextrin in which a content of carbohydrates with a molecular weight of 100,000 or more is 8% by weight or less, 7% by weight or less, 6% by weight or less, 5% by weight or less, 4% by weight or less, 3% by weight or less, 2% by weight or less, or 1% by weight or less, based on 100% by weight of the total solid content.

For example, it may be the dextrin in which a content of carbohydrates with a molecular weight of 50,000 or more is 14% by weight or less, 13% by weight or less, 12% by weight or less, 11% by weight or less, 10% by weight or less, 9% by weight or less, 8% by weight or less, 7% by weight or less, 6% by weight or less, 5% by weight or less, 4% by weight or less, or 3% by weight or less, based on 100% by weight of the total solid content.

For example, it may be the dextrin in which a content of carbohydrates with a molecular weight of 25,000 or more is 22% by weight or less, 21% by weight or less, 20% by weight or less, 19% by weight or less, 18% by weight or less, 17% by weight or less, 16% by weight or less, 15% by weight or less, 14% by weight or less, 13% by weight or less, 12% by weight or less, 11% by weight or less, 10% by weight or less, 9% by weight or less, 8% by weight or less, or 7% by weight or less, based on 100% by weight of the total solid content.

For example, it may be the dextrin in which a content of carbohydrates with a molecular weight of 250,000 or more of 2% by weight or less, 1.9% by weight or less, 1.8% by weight or less, 1.7% by weight or less, 1.6% by weight or less, 1.5% by weight or less, 1% by weight or less, or 0.5% by weight or less, based on 100% by weight of the total solid.

For example, it may be the dextrin in which a content of carbohydrates with a molecular weight of 1,000 or less is 8% by weight or less, 7.5 % by weight or less, 7% by weight or less, 6.8% by weight or less, 6.2% by weight or less, 6% by weight or less, 5.5% by weight or less, 5% by weight or less, or 4.5% by weight or less, based on 100% by weight of the total solid.

The molecular weight may be an average molecular weight, and for example, may be a weight average molecular weight or number average molecular weight.

The dextrin according to an embodiment of the present invention may comprise polysaccharides of saccharide with DP11 or more, oligosaccharides of saccharide with DP3 to DP10, monosaccharides and disaccharides at a specific weight ratio, and may have a specific Dextrose Equivalent (DE) value.

Dextrose Equivalent (DE) is an indicator of the degree of hydrolysis of starch, and may have 1 to 100 values depending on the degree of hydrolysis of starch into glucoses, based on the DE value of 1 for starch and the DE value of 100 for the case in that starch is completely decomposed into glucoses. The starch hydrolysate is commonly classified according to the DE value, and the starch hydrolysate having a DE value of about 5 to 20 is generally referred to as dextrin. Dextrin with a DE value of about 20 or less, has a low degree of hydrolysis of starch compared to syrup or corn syrup with a DE value of about 20 or more, so it comprises a certain amount of high-molecular polysaccharides, and has a problem in that turbidity occurs in case of a liquid phase. Therefore, conventional dextrin with a DE value of about 12 or less is difficult to produce in a liquid phase as turbidity occurs at a high concentration, and there is a problem of poor quality due to turbidity occurrence when applied to applied products, so it is distributed only as powder and thus production efficiency is low. The dextrin according to one embodiment of the present invention can be distributed in a liquid phase as it has a low DE value, but not cause turbidity formation, and thus storage stability is improved.

For example, the dextrin according to one embodiment of the present invention may have Dextrose Equivalent (DE) of 20 or less, less than 18, 18 or less, 15 or less, 12 or less, less than 12, 11 or less, or 10 or less.

For example, the dextrin may comprise polysaccharides of saccharide with DP10 or more of 60% by weight or more, 62% by weight or more, 63% by weight or more, 64% by weight or more, 65% by weight or more, or 66% by weight or more, based on 100% by weight of the total solid.

For example, the dextrin may comprise monosaccharides and disaccharides of 5% by weight or less, 4% by weight or less, less than 4% by weight, 3% by weight or less, 2% by weight or less, 1% by weight or less, or 0.5% by weight or less, based on 100% by weight of the total solid. Otherwise, the dextrin may not comprise monosaccharides and disaccharides.

For example, the dextrin may comprise oligosaccharides of saccharide with DP3 to DP9, for example, maltooligosaccharides of 40% by weight or less, 38% by weight or less, 35% by weight or less, or 34% by weight or less, based on 100% by weight of the total solid.

For example, the dextrin may comprise oligosaccharides of saccharide with DP3 to DP9, for example, maltooligosaccharides of 0% by weight or more, 5% by weight or more, 10% by weight or more, 15% by weight or more, 20% by weight or more, or 25% by weight or more, based on 100% by weight of the total solid.

The maltooligosaccharides are functional saccharides capable of being used for an effect of preventing protein denaturation and giving a masking effect and soft texture for food. The maltooligosaccharides include maltoriose (G3), maltotetraose (G4), maltopentaose (G5), maltohexaose (G6), maltoheptaose (G7), maltooctaose (G8), and maltononaose (G9), and the like, and the maltooligosaccharides comprised in the dextrin of the present invention may be maltooligosaccharides with DP3 to DP10.

The dextrin according to one embodiment of the present invention may have a solid content of 10 to 90% by weight, 20 to 90% by weight, 30 to 90% by weight, 40 to 90% by weight, 50 to 90% by weight, 10 to 80% by weight, 20 to 80% by weight, 30 to 80% by weight, 40 to 80% by weight, 50 to 80% by weight, 10 to 70% by weight, 20 to 70% by weight, 30 to 70% by weight, 40 to 70% by weight, or 50 to 70% by weight based on 100% by weight of the composition, and preferably, may have a solid content of 50% by weight or more. The dextrin according to one embodiment of the present invention may have a high content of solid content that is 50% by weight or more, and also turbidity may be improved, and therefore, the storage stability may be increased.

The dextrin according to one embodiment of the present invention has high solid content, and it may be stored in a high-concentration liquid phase. Herein, "turbidity improvement" may mean that occurrence of turbidity is improved, or occurrence of turbidity is prevented, when it is a liquid phase, and may mean that it is transparent when it is a liquid phase. Herein, "liquid dextrin" is used as a meaning of including a dextrin solution or dextrin syrup in which dextrin is mixed with a solvent, for example, water. The dextrin according to one embodiment of the present invention is liquid, and turbidity may be improved, and turbidity may be prevented during freezing and/or thawing processes, or turbidity may be prevented during refrigeration. Whether the turbidity occurs may be determined by measuring an absorbance of liquid dextrin, and for example, the turbidity may be distinguished as the turbidity occurs when the absorbance at a wavelength of 720 nm using a spectrophotometer is 0.09 or more, more than 0.08, more than 0.07, more than 0.06, or more than 0.05. Accordingly, the dextrin according to one embodiment of the present invention may have an absorbance at a wavelength of 720 nm using a spectrophotometer during a refrigerating process, a thawing process, and/or refrigeration of less than 0.09, 0.08 or less, 0.07 or less, 0.06 or less, or 0.05 or less.

For example, the dextrin according to one embodiment of the present invention may be prevented from turbidity when freezing and thawing are repeated once, twice, 3 times, 4 times, 5 times, 6 times, 7 times, 8 times, 9 times, 10 times, 11 times, 12 times, 13 times, 14 times, 15 times, 16 times, 17 times, 18 times, 19 times, or 20 times. Therefore, the dextrin according to the present invention have stability for freezing and thawing.

For example, the dextrin according to one embodiment of the present invention may be prevented from turbidity when stored at a refrigeration temperature for 1 day, 2 days, 3 days, 4 days, 5 days, 6 days, 7 days, 8 days, 9 days, 10 days, 11 days, 12 days, 13 days, 14 days, 15 days, 16 days, 17 days, 18 days, 19 days, or 20 days. The refrigeration temperature may be a temperature of 0 to 10°C, 1 to 10°C, 2 to 10°C, 3 to 10°C, 4 to 10°C, 5 to 10°C, 0 to 9°C, 1 to 9°C, 2 to 9°C, 3 to 9°C, 4 to 9°C, 5 to 9°C, 0 to 8°C, 1 to 8°C, 2 to 8°C, 3 to 8°C, 4 to 8°C, 5 to 8°C, 0 to 7°C, 1 to 7°C, 2 to 7°C, 3 to 7°C, 4 to 7°C, 5 to 7°C, 0 to 6°C, 1 to 6°C, 2 to 6°C, 3 to 6°C, 4 to 6°C, or 5 to 6°C, and as one example, it may be a temperature of 5°C. Therefore, the dextrin according to the present invention has stability for refrigeration.

The dextrin according to one embodiment of the present invention may be characterized by having a low DE value, and also having a low viscosity. The dextrose equivalent (DE) is generally known to be related to viscosity, and it is general that the viscosity is high as gelation of high-molecular saccharides occurs, when the DE value is low as the degree of hydrolysis of starch is low. However, the dextrin according to one embodiment of the present invention, may have a relatively reduced distribution ratio of high-molecular saccharides which affects the viscosity, so the viscosity may be reduced.

For example, the viscosity of the dextrin according to one embodiment of the present invention may be 50 to 300 mPa*s, 50 to 250 mPa*s, 50 to 200 mPa*s, 50 to 150 mPa*s, 50 to 140 mPa*s, 50 to 130 mPa*s, 50 to 120 mPa*s, 60 to 300 mPa*s, 60 to 250 mPa*s, 60 to 200 mPa*s, 60 to 150 mPa*s, 60 to 140 mPa*s, 60 to 130 mPa*s, 60 to 120 mPa*s, 70 to 300 mPa*s, 70 to 250 mPa*s, 70 to 200 mPa*s, 70 to 150 mPa*s, 70 to 140 mPa*s, 70 to 130 mPa*s, 70 to 120 mPa*s, 80 to 300 mPa*s, 80 to 250 mPa*s, 80 to 200 mPa*s, 80 to 150 mPa*s, 80 to 140 mPa*s, 80 to 130 mPa*s, 80 to 120 mPa*s, 90 to 300 mPa*s, 90 to 250 mPa*s, 90 to 200 mPa*s, 90 to 150 mPa*s, 90 to 140 mPa*s, 90 to 130 mPa*s, or 90 to 120 mPa*s, in 50 Brix, at a temperature of 30°C.

Other one embodiment of the present invention, relates to powder dextrin, in which the dextrin according to the present invention is powdered. The dextrin is as described above, and the powder dextrin may be one in which the dextrin is sprayed and powdered. The powder dextrin according to the present invention may have improved turbidity when dissolved in water. The turbidity is as described above, and the powder dextrin according to the present invention may have an effect of improving turbidity equivalent to the dextrin with improved turbidity according to the present invention after going through a dissolving process.

The dextrin according to the present invention may be produced by a method comprising a step of liquefying and/or saccharifying starch; and a step of high-purity separating it using an SMB (simulated moving bed).

The high-purity separating using the SMB chromatography (simulated moving bed adsorption separation method) is a method of separation that is easy to secure stability of a substance as there is no phase change during the separating process. As the simulated moving bed adsorption separation method (simulated moving bed, SMB) continuously separates using a number of columns, it has advantages compared to conventional fed-batch chromatography that the purity and productivity are excellent and using less solvent is possible. The simulated moving bed (SMB) adsorption separation process is a process in which injection of a mixture to be separated and production of extract are continuously conducted.

As a salt-added cation exchange resin of strong acid that is widely used in a monosaccharide separation process is used in the SMB as a separation resin, a metal ion is comprised in the product obtained after performing the separation process. The example of the cation exchange resin of strong acid may be a cation exchange resin in which a calcium active group is attached.

The dextrin may be produced by a method further comprising a step of performing at least one process selected from the group consisting of decoloring, ion purification and concentration, after the step of liquefying and/or saccharifying.

The dextrin may be produced by further performing a step of ion purification and/or concentration steps, after the step of high-purity separating. The saccharide composition comprised in the concentrate after going through the concentration step may have little change in the saccharide composition of the high-purity fraction obtained from the SMB chromatography separation process, and it may be concentrated so as to be a desired solid content.

The dextrin may be produced by further going through a step of drying and powdering, and a step of dissolving powder in water, after the step of high-purity separating, or after going through a step of purifying and/or concentrating after the step of high-purity separating.

Other one embodiment of the present invention relates to a method for producing of dextrin with improved turbidity, comprising a step of liquefying starch to produce a reacting product with Dextrose Equivalent (DE) of 15 to 30; and a step of obtaining a high-molecular fraction by separating the reacting product into a high-molecular fraction and a low-molecular fraction. The method for producing may further comprise a step of concentrating the high-molecular fraction. The dextrin with improved turbidity is as described above.

The reacting product have a specific saccharide composition, so it may obtain an oligosaccharide fraction with DP3 to DP9 saccharides content of 50% by weight or more, 55% by weight or more, 60% by weight or more, 65% by weight or more, 70% by weight or more, 75% by weight or more, 80% by weight or more, or 85% by weight or more, as a low-molecular fraction, together with a high-molecular fraction. For example, the step of obtaining the high-molecular fraction may obtain the low-molecular fraction together, and the low-molecular fraction may have DP3 to DP9 saccharides content of 50% by weight or more.

The reacting product may have a content of saccharides with DP3 or more of 75% by weight or more, 80% by weight or more, or 85% by weight or more, based on 100% by weight of the solid content.

The reacting product may have a content of saccharides with DP10 or more of 5% by weight or more, 10% by weight or more, 15% by weight or more, 20% by weight or more, or 30% by weight or more, based on 100% by weight of the solid content. Otherwise, the reacting product may have a content of a saccharide with DP10 or more of 60% by weight or less, 50% by weight or less, 40% by weight or less, 35% by weight or less, 30% by weight or less, 25% by weight or less, or 20% by weight or less, based on 100% by weight of the solid content.

The reacting product may have a content of DP3 to DP9 saccharides of 40% by weight or more, 50% by weight or more, 60% by weight or more, or 70% by weight or more, based on 100% by weight of the solid content.

The reacting product may have a content of monosaccharides and disaccharides of 20% by weight or less, 15% by weight or less, or 10% by weight or less, based on 100% by weight of the solid content.

As one embodiment, the reacting product may have a content of saccharides with DP10 or more of 40% by weight or less, a content of DP3 to DP9 saccharides of 40% by weight or more, and a content of monosaccharides and disaccharides of 20% by weight or less, based on 100% by weight of the solid content.

The monosaccharide may comprise at least one selected from the group consisting of glucose, fructose and galactose, and the disaccharide may comprise at least one selected from the group consisting of maltose, isomaltose, cellobiose, nigerose, kojibiose and trehalose.

More specifically, the method for producing of dextrin according to one embodiment of the present invention, may comprise a step of obtaining a starch hydrolysate having Dextrose Equivalent (DE) of 15 to 30 by liquefying starch and saccharifying it by maltogenic a-amylase; and a step of obtaining a high-molecular fraction by performing high-purity separating the starch hydrolysate by using an SMB.

The step of liquefying the starch may be preferably reacting up to DE 20 to 30, 20 to 28, 20 to 26, 20 to 24, 21 to 30, 21 to 28, 21 to 26, or 21 to 24. For example, the step of liquefying may be obtaining a high-molecular fraction by performing high-purity separation after reacting up to DE 21 to 24, and may produce dextrin with a lower average molecular weight of high-molecular saccharides than conventional dextrin.

The method for producing of dextrin according to the present invention may produce it by a method comprising a step of liquefying starch, a step of saccharifying, and a step of high-purity separating by using an SMB (simulated moving bed).

The dextrin may be produced by a method which further comprises a step of performing at least one process selected from the group consisting of decoloring, ion purification and concentration, after the step of liquefying and/or saccharifying.

The dextrin may be produced by further performing a step of ion purification and/or concentration, after the step of high-purity separating.

The step of concentrating may concentrate the high-purity fraction obtained in the step of high-purity separating up to the desired solid content and obtain dextrin, and for example, it may concentrate it up to the solid content of 30 to 90% by weight, 40 to 90% by weight, 50 to 90% by weight, 30 to 80% by weight, 40 to 80% by weight, 50 to 80% by weight, 30 to 70% by weight, 40 to 70% by weight, or 50 to 70% by weight, and preferably, it may concentrate it up to the solid content of 50% by weight or more.

The dextrin may be produced by further going through a step of drying and powdering and a step of dissolving powder in water, after the step of high-purity separating, or after going through the step of purification and/or concentration after the high-purity separating.

Other one embodiment of the present invention relates to a method for producing dextrin and an oligosaccharide at the same time, comprising a step of liquefying starch to produce a reacting product with Dextrose Equivalent (DE) of 15 to 30; and a step of obtaining a high-molecular fraction and a low-molecular fraction by separating the reacting product into a high-molecular fraction and a low-molecular fraction, wherein the reacting product have a content of saccharides with DP3 or more of 85% by weight or more, based on 100% by weight of the solid content. The method for producing at the same time may further comprise a step of obtaining dextrin from the high-molecular fraction, and obtaining an oligosaccharide from the low-molecular fraction. The oligosaccharide may have a content of DP3 to DP9 saccharides of 50% by weight or more. As one embodiment, the oligosaccharide may be a G4 oligosaccharide comprising maltotetraose (G4) of 5% by weight or more, 10% by weight or more, 20% by weight or more, 30% by weight or more, 40% by weight or more, 45% by weight or more, 50% by weight or more, 60% by weight or more, or 65% by weight or more, based on 100% by weight of the solid content.

The saccharide composition of the reacting product is as described above, and for example, the reacting product may have a content of saccharides with DP10 or more of 40% by weight or less, a content of DP3 to DP9 saccharides of 40% by weight or more, and a content of monosaccharides and disaccharides of 20% by weight or less, based on 100% by weight of the solid content.

Other one embodiment of the present invention relates to a method for producing powder dextrin, comprising a step of powdering the dextrin according to one embodiment of the present invention. The dextrin and the powder dextrin are as described above.

### [ADVANTAGEOUS EFFECTS]

The dextrin syrup composition according to one embodiment of the present invention has excellent storage stability due to improved turbidity, and therefore, it can be used for food, beverage, feed for livestock, health/nutritional food for livestock, medicinal products, cosmetics, and the like. The dextrin syrup composition according to one embodiment of the present invention can soften the texture of food and feed, increase the volume, increase the concentration, prevent crystallization of saccharides, and enhance flavor and sweetness. The dextrin syrup composition according to one embodiment of the present invention can replace all or part of ionic corn syrup, malt corn syrup, and low-sugar corn syrup components of food.

### [BRIEF DESCRIPTION OF THE DRAWINGS]

FIG. 1 is a drawing showing the result of the 20^{th} freeze-thaw cycles of freeze-thaw stability experiment of the dextrin according to an embodiment of the present invention.
FIG. 2 is a drawing showing a standard graph for testing the molecular weight distribution of the dextrin according to an embodiment of the present invention.

### [MODE FOR INVENTION]

Hereinafter, the present invention will be described in more detail by the following examples. However, these examples are intended to illustrate the present invention only, but the scope of the present invention is not limited by these examples.

### Example 1. Production of dextrin with improved turbidity (1)

7,000g of corn starch was mixed with 13,000g of water, and the high-temperature liquefaction reaction at 110 °C was carried out using a liquefying enzyme (α-amylase) (LpHera^{®}, Novozymes) through a hydroheater, and then the resultant was passed a hydroheater at 130°C to 140°C again to deactivate the liquefying enzyme.

Thereafter, after lowering the resultant to 61 °C by passing through a heat exchanger, a high content of maltotetraose was hydrolyzed using exo-maltotetrahydrolase (Amylo-G4^{™}, Samyang Corporation) as heat-resistant a-amylase derived from *Pseudomonas stutzeri,* to complete the reaction at DE 20 to 22.

Then, after heating the reaction product to 80 °C, activated carbon was added in 0.1 to 0.8 % by weight based on the solid content and stirred for 30 minutes or more. After that, the activated carbon was removed through a filter press, and was concentrated to produce 9,600 g of saccharide solution (Sample 1). The saccharide composition of Sample 1 was analyzed and described as % by weight in Table 1.

In order to obtain dextrin from Sample 1, SMB (simulated moving bed) separation was performed to separate a high-molecular fraction and a low-molecular fraction. As a separation resin, UBK530 Na type resin was used. The high-molecular fraction was obtained as a dextrin fraction, and the low-molecular fraction was obtained as an oligosaccharide fraction. The saccharide compositions of the dextrin fraction and the oligosaccharide fraction are shown in Table 1 based on 100% by weight of the solid content.

Then, the dextrin fraction was subjected to ion-purification process and concentrated so that the solid content was to be 50% by weight, 60% by weight, or 70% by weight, which was used for a subsequent experiment (sample name: Example 1).

**[Table 1]**

| Classification | DE | DP10+ | DP9 | DP8 | DP7 | DP6 | DP5 | DP4 | DP3 | DP2 | DP1 |
|---|---|---|---|---|---|---|---|---|---|---|---|
| Sample 1 | 21 | 32.9 | 0.0 | 2.1 | 0.0 | 0.3 | 2.6 | 46.7 | 8.6 | 5.3 | 1.4 |
| Dextrin fraction | 7.5 | 74.6 | 0.0 | 5.0 | 2.1 | 3.2 | 2.9 | 12.2 | 0.0 | 0.0 | 0.0 |
| Oligosaccharide fraction | 27.5 | 0.2 | 0.0 | 0.0 | 0.0 | 2.7 | 4.9 | 60.3 | 18.5 | 11.8 | 1.7 |

### Example 2. Production of dextrin with improved turbidity (2)

It was performed by the substantially same method as Example 1, but the enzyme reaction was completed at DE 22-24, and the reacting product was subjected to activated carbon, filter press, ion purification and concentration in the same method as Example 1, and 9600g of saccharide solution (Sample 2) was obtained. The saccharide composition of Sample 2 was analyzed and described as % by weight in Table 2.

By the substantially same method as Example 1, SMB was performed to separate Sample 2 into a high-molecular fraction and a low-molecular fraction, and thereby, a dextrin fraction and an oligosaccharide fraction were obtained. The saccharide composition of the obtained dextrin fraction and oligosaccharide fraction are shown based on 100% by weight of the solid content in Table 2.

After that, the dextrin fraction was subjected to ion purification and concentrated so that the solid content was 50% by weight, 60% by weight, or 70% by weight through ion purification, and then it was used for a subsequent experiment (sample name: Example 2).

**[Table 2]**

| Classification | DE | DP10+ | DP9 | DP8 | DP7 | DP6 | DP5 | DP4 | DP3 | DP2 | DP1 |
|---|---|---|---|---|---|---|---|---|---|---|---|
| Sample 2 | 23.0 | 16.9 | 1.9 | 2.9 | 1.5 | 1.9 | 0.1 | 54.2 | 10.3 | 7.2 | 3.1 |
| Dextrin fraction | 8.1 | 67.83 | 0 | 0 | 0 | 7.85 | 8.8 | 15.32 | 0 | 0.1 | 0.1 |
| Oligosaccharide fraction | 26.2 | 0 | 0 | 0 | 2.72 | 2.3 | 2.07 | 68.14 | 13.44 | 8.62 | 2.71 |

### Example 3. Production of dextrin with improved turbidity (3)

7,000g of corn starch was mixed with 13,000g of water, and the high-temperature liquefaction reaction at 110 °C was carried out using a liquefying enzyme (Lphera^{®}, Novozymes) through a hydroheater, and then the liquefying enzyme was deactivated at DE 20-24.

After heating to 80 °C, activated carbon was added in 0.1 to 0.8 % by weight compared to the solid content and stirred for 30 minutes or more. After that, the activated carbon was removed through a filter press, and then 9,600g of saccharide solution (Sample 3) was obtained through ion purification and concentration. The saccharide composition of Sample 3 was analyzed and described as % by weight in Table 3.

In order to obtain dextrin from Sample 3, SMB (simulated moving bed) separation was performed to separate a high-molecular fraction and a low-molecular fraction. As a separation resin, UBK530 Na type resin was used, and the high-molecular fraction was obtained as a dextrin fraction, and the low-molecular fraction was obtained as an oligosaccharide fraction. The saccharide composition of the dextrin fraction and oligosaccharide fraction are shown in Table 3 based on 100% by weight of the solid content.

Then, the dextrin fraction was subjected to ion purification and concentrated so that the solid content was to be 50% by weight, 60% by weight, or 70% by weight, and it was used for a subsequent experiment (sample name: Example 3).

**[Table 3]**

| Classification | DE | DP10+ | DP9 | DP8 | DP7 | DP6 | DP5 | DP4 | DP3 | DP2 | DP1 |
|---|---|---|---|---|---|---|---|---|---|---|---|
| Sample 3 | 24.6 | 28.9 | 1.4 | 1.4 | 6.5 | 17.3 | 11.1 | 6.6 | 12.9 | 9.9 | 3.8 |
| Dextrin fraction | 8.3 | 71.5 | 2.2 | 3.5 | 5.8 | 9.8 | 6.1 | 1.1 | 0 | 0 | 0 |
| Oligosaccharide fraction | 26.2 | 0.5 | 0.2 | 0.8 | 6.3 | 25.6 | 17.2 | 9.8 | 20.6 | 13.1 | 5.9 |

### Example 4. Freeze-thaw stability test of dextrin with improved turbidity (1)

After ion purification of the dextrin fraction produced in Example 1 to Example 3, they were concentrated to 50 % by weight of the solid content, and then, were tested for the freeze-thaw stability of liquid dextrin. As a control group, DE 7 dextrin (Comparative example 1), DE 12 dextrin (Comparative example 2) and DE 18 dextrin (Comparative example 3) were used by concentrating to 50% by weight of the solid content. The saccharide compositions of dextrins of Comparative example 1 to Comparative example 3 are shown in Table 4.

**[Table 4]**

| Classification | DE | saccharides with DP10 or more | Maltooligosaccharide (saccharides with DP 3 to 9) | Monosaccharide and disaccharide |
|---|---|---|---|---|
| Comparative | 7 | 75.4 | 22.1 | 2.5 |
| example 1 | | | | |
| Comparative example 2 | 12 | 61.8 | 34.2 | 4.0 |
| Comparative example 3 | 18 | 37.7 | 52.6 | 9.7 |

Six kinds of liquid dextrin samples were left in a freezer at 20 degrees below zero for 1 hour, and then thawed by being left at a room temperature for 1 hour which was one freeze-thaw cycle, and then the leaving at a freezer for 1 hour and the thawing at a room temperature for 1 hour were repeated. At each cycle, whether turbidity occurred in the solution was tested by measuring an absorbance at 720nm using a spectrophotometer. This causes aging of the water-soluble high molecular dextrin and is intended to test the stability of product quality.

The results of freeze-thaw stability test are shown in Table 5. As shown in Table 5, in the dextrin solution of Examples 1 and 2, turbidity was not generated until the 20th cycle. Turbidity was generated from the second cycle in the dextrin syrup of Comparative example 1, turbidity was generated from the 8th cycle in the dextrin syrup of Comparative example 2, and turbidity was generated from the 12th cycle in the dextrin solution of Comparative example 3.

**[Table 5]**

| Cycle | Example 1 | Example 2 | Example 3 | Comparative example 1 | Comparative example 2 | Comparative example 3 |
|---|---|---|---|---|---|---|
| 1 | 0.00 | 0.00 | 0.00 | 0.00 | 0.00 | 0.00 |
| 2 | 0.00 | 0.00 | 0.00 | **0.38** | 0.00 | 0.00 |
| 3 | 0.00 | 0.00 | 0.00 | **0.86** | 0.00 | 0.00 |
| 4 | 0.00 | 0.00 | 0.00 | **1.15** | 0.00 | 0.00 |
| 5 | 0.00 | 0.00 | 0.00 | **1.26** | 0.00 | 0.00 |
| 6 | 0.00 | 0.00 | 0.00 | **1.27** | 0.00 | 0.00 |
| 7 | 0.00 | 0.00 | 0.00 | **1.28** | 0.00 | 0.00 |
| 8 | 0.00 | 0.00 | 0.00 | **1.29** | **0.16** | 0.00 |
| 9 | 0.00 | 0.00 | 0.00 | **1.29** | **0.59** | 0.00 |
| 10 | 0.00 | 0.00 | 0.00 | **1.29** | **0.89** | 0.00 |
| 11 | 0.00 | 0.00 | 0.00 | **1.28** | **1.25** | 0.00 |
| 12 | 0.00 | 0.00 | 0.00 | **1.28** | **1.23** | **0.13** |
| 13 | 0.00 | 0.00 | 0.00 | **1.29** | **1.29** | **0.46** |
| 14 | 0.00 | 0.00 | 0.00 | **1.27** | **1.27** | **0.92** |
| 15 | 0.00 | 0.00 | 0.00 | **1.28** | **1.29** | **1.23** |
| 16 | 0.00 | 0.00 | 0.00 | **1.27** | **1.27** | **1.23** |
| 17 | 0.00 | 0.00 | 0.00 | **1.28** | **1.28** | **1.23** |
| 18 | 0.00 | 0.00 | 0.00 | **1.29** | **1.27** | **1.24** |
| 19 | 0.00 | 0.00 | 0.00 | **1.29** | **1.29** | **1.24** |
| 20 | 0.00 | 0.00 | 0.00 | **1.28** | **1.24** | **1.25** |

### Example 5. Freeze-thaw stability test of dextrin with improved turbidity (2)

By the same method as Example 4, after ion purification of the dextrin fractions produced in Example 1 to Example 3, they were concentrated to 60 % by weight of the solid content, and thereby, a freeze-thaw stability of liquid dextrin was tested. As a control group, the dextrin of Comparative example 1 to Comparative example 3 were used by concentrating to 60% by weight of the solid content.

The freeze-thaw stability test results are shown in Table 6. As shown in Table 6, in the liquid dextrin of Examples 1 to 3, turbidity was not generated until the 20th round. Turbidity was generated from the 1st round in the dextrin syrup of Comparative example 1, turbidity was generated from the 5th round in the liquid dextrin of Comparative example 2, and turbidity was generated from the 8th round in the liquid dextrin of Comparative example 3.

**[Table 6]**

| Cycle | Example 1 | Example 2 | Example 3 | Comparative example 1 | Comparative example 2 | Comparative example 3 |
|---|---|---|---|---|---|---|
| 1 | 0.00 | 0.00 | 0.00 | **0.41** | 0.00 | 0.00 |
| 2 | 0.00 | 0.00 | 0.00 | **0.86** | 0.00 | 0.00 |
| 3 | 0.00 | 0.00 | 0.00 | **1.24** | 0.00 | 0.00 |
| 4 | 0.00 | 0.00 | 0.00 | **1.29** | 0.00 | 0.00 |
| 5 | 0.00 | 0.00 | 0.00 | **1.28** | **0.12** | 0.00 |
| 6 | 0.00 | 0.00 | 0.00 | **1.29** | **0.33** | 0.00 |
| 7 | 0.00 | 0.00 | 0.00 | **1.27** | **0.74** | 0.00 |
| 8 | 0.00 | 0.00 | 0.00 | **1.29** | **1.11** | **0.09** |
| 9 | 0.00 | 0.00 | 0.00 | **1.29** | **1.28** | **0.25** |
| 10 | 0.00 | 0.00 | 0.00 | **1.28** | **1.26** | **0.68** |
| 11 | 0.00 | 0.00 | 0.00 | **1.29** | **1.28** | **0.92** |
| 12 | 0.00 | 0.00 | 0.00 | **1.29** | **1.28** | **1.28** |
| 13 | 0.00 | 0.00 | 0.00 | **1.27** | **1.26** | **1.26** |
| 14 | 0.00 | 0.00 | 0.00 | **1.29** | **1.27** | **1.28** |
| 15 | 0.00 | 0.00 | 0.00 | **1.28** | **1.29** | **1.28** |
| 16 | 0.00 | 0.00 | 0.00 | **1.29** | **1.27** | **1.29** |
| 17 | 0.00 | 0.00 | 0.00 | **1.29** | **1.28** | **1.28** |
| 18 | 0.00 | 0.00 | 0.00 | **1.29** | **1.27** | **1.29** |
| 19 | 0.00 | 0.00 | 0.00 | **1.29** | **1.29** | **1.28** |
| 20 | 0.00 | 0.00 | 0.00 | **1.28** | **1.24** | **1.29** |

### Example 6. Freeze-thaw stability test of dextrin with improved turbidity (3)

By the same method as Example 4, after ion purification of the dextrin fractions produced in Example 1 to Example 3, they were concentrated to 70 % by weight of the solid content, and thereby, a freeze-thaw stability of liquid dextrin was tested. As a control group, the dextrin of Comparative example 1 to Comparative example 3 were used by concentrating to 70% by weight of the solid content.

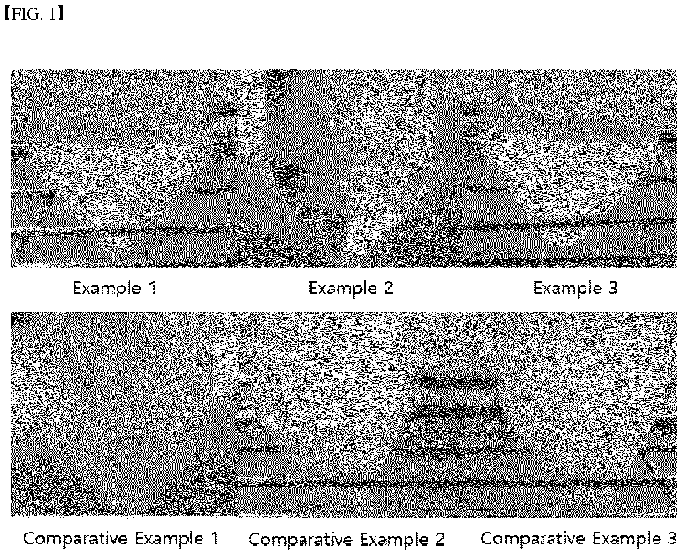

The freeze-thaw stability test results are shown in Table 7. As shown in Table 7, in the liquid dextrin of Examples 1 to 3, turbidity was not generated until the 20th round. Turbidity was generated from the 1st round in the dextrin syrup of Comparative example 1, turbidity was generated from the 2nd round in the liquid dextrin of Comparative example 2, and turbidity was generated from the 4th round in the liquid dextrin of Comparative example 3. The figures after the 20th freeze-thaw stability test result of each sample are shown in FIG. 1.

**[Table 7]**

| Cycle | Example 1 | Example 2 | Example 3 | Comparative example 1 | Comparative example 2 | Comparative example 3 |
|---|---|---|---|---|---|---|
| 1 | 0.00 | 0.00 | 0.00 | **1.26** | 0.00 | 0.00 |
| 2 | 0.00 | 0.00 | 0.00 | **1.28** | **0.25** | 0.00 |
| 3 | 0.00 | 0.00 | 0.00 | **1.27** | **0.67** | 0.00 |
| 4 | 0.00 | 0.00 | 0.00 | **1.28** | **1.26** | **0.19** |
| 5 | 0.00 | 0.00 | 0.00 | **1.29** | **1.26** | **0.58** |
| 6 | 0.00 | 0.00 | 0.00 | **1.28** | **1.26** | **1.09** |
| 7 | 0.00 | 0.00 | 0.00 | **1.28** | **1.28** | **1.26** |
| 8 | 0.00 | 0.00 | 0.00 | **1.28** | **1.27** | **1.28** |
| 9 | 0.00 | 0.00 | 0.00 | **1.29** | **1.28** | **1.27** |
| 10 | 0.00 | 0.00 | 0.00 | **1.29** | **1.26** | **1.28** |
| 11 | 0.00 | 0.00 | 0.00 | **1.29** | **1.28** | **1.28** |
| 12 | 0.00 | 0.00 | 0.00 | **1.29** | **1.28** | **1.28** |
| 13 | 0.00 | 0.00 | 0.00 | **1.28** | **1.26** | **1.26** |
| 14 | 0.00 | 0.00 | 0.00 | **1.28** | **1.27** | **1.28** |
| 15 | 0.00 | 0.00 | 0.00 | **1.27** | **1.29** | **1.28** |
| 16 | 0.00 | 0.00 | 0.00 | **1.29** | **1.27** | **1.29** |
| 17 | 0.00 | 0.00 | 0.00 | **1.28** | **1.28** | **1.28** |
| 18 | 0.00 | 0.00 | 0.00 | **1.29** | **1.27** | **1.29** |
| 19 | 0.00 | 0.00 | 0.00 | **1.28** | **1.29** | **1.28** |
| 20 | 0.00 | 0.00 | 0.00 | **1.29** | **1.24** | **1.29** |

### Example 7. Cold storage stability test of dextrin with improved turbidity

It was conducted by the same method as Example 6, but six kinds of liquid dextrin samples having 70% by weight of solid content were stored in a refrigerator at 5 degrees above zero, and turbidity generation was tested at every 24 hours by the same method as Example 4. The results of cold-storage stability test are shown in Table 8. As shown in Table 8, in the liquid dextrin of Example 1 to Example 3, turbidity was not generated until the 20th round, and in the liquid dextrin of Comparative example 1 to Comparative example 3, turbidity was generated on the first day of storage.

**[Table 8]**

| Cycle | Example 1 | Example 2 | Example 3 | Comparative example 1 | Comparative example 2 | Comparative example 3 |
|---|---|---|---|---|---|---|
| Day 1 | 0.00 | 0.00 | 0.00 | **1.28** | **1.28** | 0.00 |
| Day 2 | 0.00 | 0.00 | 0.00 | **1.29** | **1.28** | **0.24** |
| Day 3 | 0.00 | 0.00 | 0.00 | **1.28** | **1.28** | **0.61** |
| Day 4 | 0.00 | 0.00 | 0.00 | **1.28** | **1.26** | **1.06** |
| Day 5 | 0.00 | 0.00 | 0.00 | **1.29** | **1.27** | **1.26** |
| Day 6 | 0.00 | 0.00 | 0.00 | **1.28** | **1.26** | **1.28** |
| Day 7 | 0.00 | 0.00 | 0.00 | **1.28** | **1.29** | **1.26** |
| Day 8 | 0.00 | 0.00 | 0.00 | **1.29** | **1.26** | **1.28** |
| Day 9 | 0.00 | 0.00 | 0.00 | **1.28** | **1.29** | **1.29** |
| Day 10 | 0.00 | 0.00 | 0.00 | **1.28** | **1.28** | **1.29** |
| Day 11 | 0.00 | 0.00 | 0.00 | **1.28** | **1.26** | **1.28** |
| Day 12 | 0.00 | 0.00 | 0.00 | **1.28** | **1.28** | **1.26** |
| Day 13 | 0.00 | 0.00 | 0.00 | **1.29** | **1.28** | **1.27** |
| Day 14 | 0.00 | 0.00 | 0.00 | **1.29** | **1.28** | **1.26** |
| Day 15 | 0.00 | 0.00 | 0.00 | **1.28** | **1.29** | **1.28** |
| Day 16 | 0.00 | 0.00 | 0.00 | **1.27** | **1.26** | **1.28** |
| Day 17 | 0.00 | 0.00 | 0.00 | **1.26** | **1.28** | **1.29** |
| Day 18 | 0.00 | 0.00 | 0.00 | **1.28** | **1.28** | **1.28** |
| Day 19 | 0.00 | 0.00 | 0.00 | **1.28** | **1.29** | **1.26** |
| Day 20 | 0.00 | 0.00 | 0.00 | **1.29** | **1.28** | **1.28** |

### Example 8. Viscosity measurement

The viscosity of the dextrin samples produced in Examples 1 to 3 was measured. Brookfield viscometer was used, and Spindle No. 62 was used to measure the viscosity. The dextrin samples produced in Examples 1 to 3 were set to 50 Brix, and after heating for 1 hour at temperatures of 30°C to 70°C with adjusting 10°C intervals, and then the viscosity was measured and shown as an mPa*s unit in Table 9. In addition, for the dextrin sample produced in Examples 1 to 3, at a temperature of 20°C, in 10 to 50 Brix with an interval of Brix 10, the viscosity was measured and shown as an mPa*s unit in Table 10.

**[Table 9]**

| Based on 50Brix, unit: mPa*s | | | | | | |
|---|---|---|---|---|---|---|
| Measurement temperature (°C) | Example 1 (DE 7.5) | Example 2 (DE 8.1) | Example 3 (DE 8.3) | Comparative example 1 (DE 7) | Comparative example 2 (DE 12) | Comparative example 3 (DE 18) |
| 30.0 | 118.0 | 85.4 | 91.5 | 686.0 | 311.0 | 117.0 |
| 40.0 | 99.5 | 68.1 | 69.0 | 517.0 | 172.0 | 98.0 |
| 50.0 | 61.5 | 41.0 | 48.5 | 428.0 | 137.0 | 64.0 |
| 60.0 | 45.5 | 33.1 | 38.5 | 339.5 | 117.0 | 51.0 |
| 70.0 | 38.5 | 28.1 | 33.5 | 273.0 | 101.0 | 39.6 |

**[Table 10]**

| Based on temperature 20°C, unit: mPa*s | | | | | | |
|---|---|---|---|---|---|---|
| Brix (%) | Example 1 (DE 7.5) | Example 2 (DE 8.1) | Example 3 (DE 8.3) | Comparative example 1 (DE 7) | Comparative example 2 (DE 12) | Comparative example 3 (DE 18) |
| 50.0 | 187.0 | 91.4 | 129.0 | 843.0 | 324.0 | 169.0 |
| 40.0 | 94.0 | 28.6 | 34.0 | 156.0 | 58.0 | 89.0 |
| 30.0 | 20.5 | 16.5 | 20.5 | 38.5 | 16.5 | 21.5 |
| 20.0 | 10.0 | 7.1 | 8.0 | 11.5 | 8.5 | 9.5 |
| 10.0 | 7.0 | 5.0 | 6.0 | 5.0 | 5.0 | 8.5 |

As shown in Table 9 and Table 10, the dextrin of Example 1 to Example 3, had a significantly lower viscosity compared to Comparative example 1 having a similar DE value, and had a similar viscosity to dextrin of DE 18. It is general that the viscosity increases as the DE value is lowered, but the dextrin of Example 1 to Example 3 showed a significantly lower viscosity, although it had a lower DE value compared to Comparative example 1 and Comparative example 2. This meant that the dextrin of Example 1 to Example 3 had a relatively reduced distribution ratio of high-molecular saccharides affecting the viscosity.

### Example 9. Molecular weight distribution analysis

In order to analyze the molecular weight distribution of the dextrin produced in Examples 1 to 3, HPLC-RI system was used, and the column used for analysis equipment was analyzed by connecting TSKgel G3000PWxl and G4000PWxl of Tosoh company, the analysis was performed at a temperature of 80°C using tertiary distilled water as a mobile phase at 0.5ml/min for 60 minutes per sample. As a control group, the dextrin samples of Comparative examples 1 and 2 were used. In addition, in order to compare the molecular weight distribution, 3 kinds of saccharide syrup samples (corn syrup) of DE 20 or more (saccharide syrup 1 (DE 24): Samyang corporation corn syrup with low sweetness, saccharide syrup 2 (DE 22): Samyang corporation maltooligosaccharide G4, saccharide syrup 3 (DE 26): G4 oligosaccharide syrup prepared as the same method of sample 1 but having 50% by weight or more of G4 oligosaccharide content and DE 26) were analyzed together.

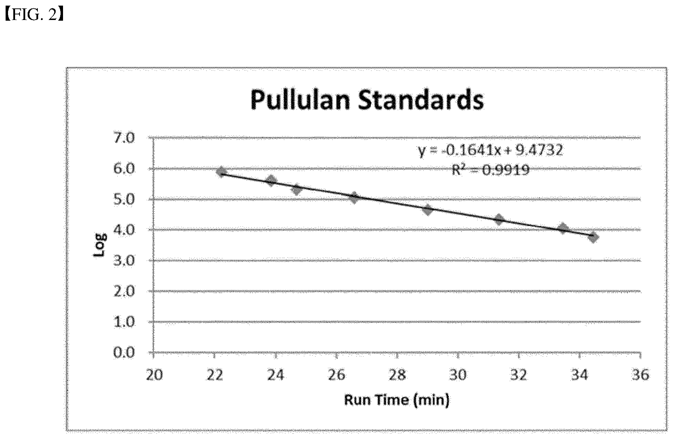

The samples were diluted by 2% by weight, and analyzed with a 20uL injection volume. In order to test the molecular weight distribution, Shodex Pullulan Standard (P-5, 10, 20, 50, 100, 200, 400, 800) of Showa denko was used. A standard graph was obtained as FIG. 2. The results of molecular weight distribution analysis are shown in Table 11.

As shown in Table 11, the dextrin samples of Example 1 to Example 3 had a lower content of carbohydrate having a molecular weight of 100,000 or more, compared to those of Comparative example 1 and Comparative example 2, and had a relatively lower content of a high-molecular polymer causing turbidity, thereby causing no turbidity. In addition, the contents of carbohydrate having a molecular weight of 1,000 or less in the dextrin samples of Example 1 to Example 3 were similar to that of Comparative example 1, so it had a low DE value of less than DE 12. Moreover, it could be seen that in the dextrin according to one embodiment of the present invention, the molecular weight distribution of the carbohydrates having a high molecular weight of 100,000 or more was similar to that of the saccharide syrup with DE 20 or higher, and the dextrin had low DE value due to a low content of monosaccharides and disaccharides. Thus, the turbidity generation of the dextrin was prevented as the saccharide syrup with DE 20 or higher. Specifically, when the molecular weight distribution of the dextrin according to one embodiment of the present invention was compared to that of the saccharide syrup with more than DE 20, it could be seen that while the content of the components with at a molecular weight (M.W.) of 2,500 or less in the saccharide syrup with more than DE 20 was 70% by weight or more of the total solid, the content of the components with a molecular weight of 2,500 or less in the dextrin samples of Examples 1 to 3 was reduced by at least 20% compared to the saccharide syrup. Therefore, the dextrin according to one embodiment of the present invention included the low-molecules at a lower ratio compared to conventional corn syrup, and the molecules with a high molecular weight having a molecular weight of 100,000 or more at a lower ratio compared to conventional dextrin, so it can give soft body taste to food and reducing a grain odor of conventional high molecular dextrin, thereby helping enhancement of sweetness and flavor of products. In addition, it has characteristics of having a function of spray bulking agent of conventional dextrin at an equal level, preventing turbidity generation, and having a viscosity similar to saccharide syrup.

**[Table 11]**

| Molecular weight (M.W.) | Example 1 | Example 2 | Example 3 | Comparative example 1 (DE7) | Comparative example 2 (DE12) | sugar syrup 1 (DE24) | sugar syrup 2 (DE22) | sugar syrup 3 (DE 26) |
|---|---|---|---|---|---|---|---|---|
| 100,000 or more | 3.00% | 4.10% | 0.90% | 14.86% | 8.05% | 0.13% | 1.43% | 0.20% |
| 50,000_{∼}100,000 | 4.8% | 5.9% | 1.9% | 8.61% | 6.73% | 0.48% | 2.36% | 0.14% |
| 25,000∼50,000 | 8.0% | 9.5% | 3.7% | 8.95% | 7.84% | 1.29% | 3.82% | 0.54% |
| 10,000∼25,000 | 16.2% | 18.6% | 9.6% | 12.07% | 12.09% | 4.21% | 7.70% | 2.07% |
| 5,000∼10,000 | 20.5% | 16.3% | 11.0% | 7.80% | 8.27% | 5.86% | 6.79% | 3.42% |
| 2,500∼5,000 | 6.1% | 14.0% | 15.7% | 13.92% | 11.30% | 9.57% | 5.81% | 6.71% |
| 1,000∼2,500 | 35.3% | 27.4% | 50.3% | 28.50% | 37.72% | 58.76% | 53.04% | 64.53% |
| 1,000 or less | 6.2% | 4.2% | 6.8% | 5.29% | 8.02% | 19.72% | 19.06% | 22.40% |

### Example 10. Simultaneous production of dextrin and maltooligosaccharide

In the production of dextrins in Examples 1 to 3, the saccharide compositions of Samples 1 to 3 obtained before SMB separation were shown based on 100% by weight of the solid content in Table 12, and the saccharide compositions of the low molecular fractions obtained after the SMB separation are shown based on 100% by weight of the solid content in Table 13.

**[Table 12]**

| Classification | DE | Saccharides with DP10 or more | Maltooligosaccharide (saccharides with DP3 to DP9) | Monosaccharide and disaccharide |
|---|---|---|---|---|
| Sample 1 | 21 | 32.9 | 60.3 | 6.7 |
| Sample 2 | 23.0 | 16.9 | 72.9 | 10.3 |
| Sample 3 | 24.6 | 28.9 | 57.2 | 13.7 |

**[Table 13]**

| Classification | DE | Saccharides with DP10 or more | Maltooligosaccharide (saccharides with DP3 to DP9) | Monosaccharide and disaccharide |
|---|---|---|---|---|
| Oligosaccharide fraction of Sample 1 | 27.5 | 0.2 | 86.4 | 13.5 |
| Oligosaccharide fraction of Sample 2 | 26.2 | 0 | 88.67 | 11.33 |
| Oligosaccharide fraction of Sample 3 | 26.2 | 0.5 | 80.5 | 19 |

As shown in Table 12, the DE value of the raw solution for separation was 20 to 28, and, based on 100% by weight of the solid content, the content of the maltooligosaccharide with DP3 to DP9 was 40% by weight or more, and the high-molecule of saccharides with DP 10 or more was 40% by weight or less, and the content of monosaccharide and disaccharide was 15% by weight or less. Based on 100% by weight of the solid content of the raw solution for separation, the total content of maltooligosaccharide with DP3 to DP9 and the saccharides with DP10 or higher was 85% by weight or more.

As described above, by performing SMB separation of the raw solution for separation which had a specific saccharide composition, a high-quality oligosaccharide fraction could be obtained together with a dextrin fraction at the same time. Specifically, as shown in Table 13, since the oligosaccharide fraction that was a by-product (raffinate) generated in the production of dextrin according to an embodiment of the present invention, is an oligosaccharide including 50% by weight or more of a maltooligosaccharide with DP3 to DP9, and has a maltooligosaccharide content of 50% or more per 1g of solid content, it is highly useful. Thus, the method for producing according to an embodiment of the present invention can simultaneously produce dextrin with improved turbidity and maltooligosaccharide with a purity of 50% or more.

## Claims

1. A dextrin with improved turbidity, in which a content of carbohydrates having a molecular weight of 100,000 or more is 8% by weight or less, based on 100% by weight of the total solid content.

2. The dextrin according to claim 1, wherein a content of carbohydrates having a molecular weight of 1,000 or less is 8% by weight or less, and a content of carbohydrates having a molecular weight of more than 1,000 to less than 100,000 is more than 84% by weight, based on 100% by weight of the total solid content.

3. The dextrin according to claim 1, wherein a content of carbohydrates having a molecular weight of 50,000 or more is 14% by weight or less, based on 100% by weight of the total solid content.

4. The dextrin according to claim 1, wherein a content of carbohydrates having a molecular weight of 25,000 or more is 22% by weight or less, based on 100% by weight of the total solid content.

5. The dextrin according to claim 1, wherein a content of carbohydrates having a molecular weight of 250,000 or more is 2% by weight or less, based on 100% by weight of the total solid content.

6. The dextrin according to claim 1, wherein the dextrin has Dextrose Equivalent (DE) of 20 or less.

7. The dextrin according to claim 1, wherein the dextrin has Dextrose Equivalent (DE) of less than 18.

8. The dextrin according to claim 1, wherein the dextrin is liquid and has a viscosity of 50 to 300 mPa*s at a temperature of 30°C.

9. The dextrin according to claim 1, comprising saccharides with DP10 or more of 60% by weight or more, based on 100% by weight of the total solid.

10. The dextrin according to claim 1, comprising saccharides with DP10 or more at 60% by weight or more, and maltooligosaccharides of DP3 to DP9 saccharides at 40 % by weight or less, based on 100% by weight of the total solid content.

11. The dextrin according to claim 1, comprising monosaccharides and disaccharides at 5% by weight or less, based on 100% by weight of the total solid content.

12. The dextrin according to claim 11, wherein the monosaccharides comprise at least one selected from the group consisting of glucose, fructose and galactose, and the disaccharides comprise at least one selected from the group consisting of maltose, isomaltose, cellobiose, nigerose, kojibiose, and trehalose.

13. The dextrin according to claim 1, wherein the dextrin is a hydrolysate of starch.

14. The dextrin according to claim 13, wherein the starch comprises amylose and/or amylopectin.

15. The dextrin according to claim 13, wherein the starch is at least one selected from the group consisting of corn starch, rice starch, barley starch, wheat starch, tapioca starch, potato starch, sweet potato starch, soybean starch, waxy corn starch and glutinous rice starch.

16. The dextrin according to claim 1, wherein the dextrin is liquid or powder.

17. The dextrin according to claim 1, wherein the dextrin is liquid, and has a solid content of 10 to 90 % by weight, based on 100% by weight in total.

18. The dextrin according to claim 1, wherein the dextrin is liquid, and the absorbance of the dextrin is less than 0.09.

19. The dextrin according to claim 1, wherein the dextrin is liquid, and the dextrin has an absorbance of less than 0.09 during a freezing and/or thawing process.

20. The dextrin according to claim 1, wherein the dextrin is liquid, and the dextrin has an absorbance of less than 0.09 when being refrigerated.

21. A method for producing the dextrin with improved turbidity according to claim 1, comprising
a step of liquefying starch and reacting to Dextrose Equivalent (DE) of 15 to 30; and
a step of obtaining a high-molecular fraction by separating reacting product into a high-molecular fraction and a low-molecular fraction.

22. The method according to claim 21, further comprising a step of concentrating the high-molecular fraction.

23. The method according to claim 21, wherein the reacting product has saccharides with DP3 or more at 75% by weight or more, based on 100% by weight of the solid content.

24. The method according to claim 21, wherein the reacting product has saccharides with DP10 or more at 40% by weight or less, saccharides with DP3 to DP9 at 40% by weight or more, and monosaccharides and disaccharides at 15% by weight or less, based on 100% by weight of the solid content.

25. The method according to claim 21, wherein the step of obtaining the high-molecular fraction, is obtaining the low-molecular fraction together, and the low-molecular fraction has a content of saccharides with DP3 to DP9 of 50% by weight or more.

26. A method for producing dextrin and oligosaccharide, comprising
a step of liquefying starch and reacting to Dextrose Equivalent (DE) of 15 to 30; and
a step of obtaining a high-molecular fraction and a low-molecular fraction by separating reacting product into a high-molecular fraction and a low-molecular fraction,
wherein the reacting product has a content of saccharides with DP3 or more of 75% by weight or more, based on 100% by weight of the solid content.

27. The method according to claim 26, wherein the reacting product has a content of saccharides with DP10 or more of 60% by weight or less, a content of saccharides with DP3 to DP9 of 40% by weight or more, and a content of monosaccharides and disaccharides of 20% by weight or less, based on 100% by weight of the solid content.

28. The method according to claim 26, wherein the oligosaccharide has a content of saccharides with DP3 to DP9 of 50% by weight or more.

29. The method according to claim 26, wherein the dextrin comprises 8% by weight or less of carbohydrates having a molecular weight of 100,000 or more, based on 100% by weight of the total solid content.
